# FASCICULE DE BREVET EUROPEEN

(11) **EP 2 462 803 B1**
(45) Date de publication et mention de la délivrance du brevet: **16.05.2018**
(21) Numéro de dépôt: 11192605.1
(22) Date de dépôt: 08.12.2011
(51) Int. Cl.: A01M 27/00, A01M 23/38

(54) **Dispositif pyrotechnique à capot de protection**
Pyrotechnische Vorrichtung mit Schutzmantel
Pyrotechnic device with protective cover

(30) Priorité: 09.12.2010 FR 1060328
(43) Date de publication de la demande: 13.06.2012
(73) Titulaire: Crea, 74130 Bonneville (FR)
(72) Inventeur: Bodo, Lionel, 74130 Ayze (FR)
(74) Mandataire: Cabinet Poncet

(56) Documents cités:
- WO-A1-00/11945
- FR-A1- 2 719 192
- FR-A1- 2 832 029
- GB-A- 2 354 693
- US-A- 4 074 456

## Description

La présente invention concerne un dispositif destiné à la destruction des animaux creusant des galeries tels qu'une taupe, et concerne plus particulièrement un dispositif pyrotechnique destiné à détruire des animaux par la mise à feu d'une charge pyrotechnique.

Un tel dispositif est par exemple connu du document FR 2 832 029. Un tel dispositif comprend généralement des moyens de détection de l'animal et un boîtier contenant :
- un circuit électrique de mise à feu comprenant un contacteur de mise à feu piloté par les moyens de détection,
- des moyens d'interruption du circuit électrique de mise à feu permettant sélectivement d'interrompre ou de rétablir la continuité d'un tronçon de circuit électrique de mise à feu.

Les moyens de détection sont généralement installés dans la cheminée ouverte d'une galerie tandis que la charge pyrotechnique est installée dans la galerie. Lorsque la taupe vient reboucher la cheminée restée ouverte, celle-ci repousse la terre et déplace alors les moyens de détection, ce qui provoque la fermeture du contacteur de mise à feu et la mise à feu de la charge pyrotechnique. L'onde de choc provoquée par la déflagration tue alors l'animal.

Ce type de piège est efficace et permet, par l'enterrement de la charge pyrotechnique, d'éviter de blesser un utilisateur ou de causer des dégâts en surface.

Toutefois, il existe un risque de déclenchement involontaire du dispositif lors de sa mise en place et du branchement de la charge pyrotechnique. Pour limiter ce risque, des systèmes de sécurité ont été proposés.

Le document EP 1 109 446 décrit à cet effet un dispositif de sécurité, constitué d'une pièce mobile dont l'une des positions s'oppose mécaniquement à l'établissement du contact de mise à feu, et qui est capable d'interdire tout déclenchement intempestif de la charge pyrotechnique au cours des opérations de branchement de la charge pyrotechnique ou lors de l'installation ou du retrait du dispositif pyrotechnique.

Le document FR 2 897 510 décrit un système de sécurité électronique agencé pour n'autoriser la mise à feu de la charge pyrotechnique qu'après un temps déterminé compté à partir de l'activation du piège, activation qui correspond à une manipulation spécifique du dispositif par l'opérateur lors de la mise en place du dispositif pyrotechnique.

Les dispositifs de sécurité des documents précités ne donnent cependant pas satisfaction. Il est en effet possible, pour un utilisateur du dispositif du document EP 1 109 446, d'omettre ou d'oublier la pièce mobile destinée à s'opposer mécaniquement à l'établissement du contact de mise à feu. Et il est difficile, pour un utilisateur du dispositif du document FR 2 897 510, d'estimer le temps qui lui est accordé pour se mettre à l'abri après activation.

En outre, aucun de ces dispositifs ne protège efficacement un utilisateur contre tout déclenchement intempestif de la charge pyrotechnique une fois le dispositif pyrotechnique installé. Il est en effet toujours possible qu'un enfant sans surveillance manipule le dispositif pyrotechnique après installation jusqu'à solliciter les moyens de détection qui provoquent alors la mise à feu accidentelle de la charge pyrotechnique.

Le document FR 2 719 192 décrit un dispositif pyrotechnique de lutte contre les taupes, comprenant un coffret fermé par un capot articulé par des charnières sur le coffret. Pour que le circuit de mise à feu soit activé, il faut que le capot soit fermé à clé afin de fermer un contacteur électronique actionné par un aimant permanent fixé sur le pêne de la serrure. Si un utilisateur saisit par son capot le dispositif pyrotechnique à l'état actif, le circuit de mise à feu n'est pas désactivé puisque le capot est fermé à clé. Il faut alors éviter une mise à feu en prévoyant un coupe-circuit à contacteur à mercure capable de détecter un basculement du dispositif, et un coupe-circuit électronique à aimant permanent capable de détecter un soulèvement du dispositif, ce qui est complexe et très onéreux.

Un autre inconvénient des dispositifs existants est qu'il est difficile de se rendre compte visuellement de façon immédiate de l'état du dispositif pyrotechnique : on ignore si celui-ci est activé, de telle sorte que sa charge pyrotechnique est prête à exploser, ou si celui-ci est désactivé, toute explosion de la charge pyrotechnique étant empêchée et le dispositif étant alors inefficace.

Un premier problème proposé par l'invention est de limiter de façon simple et efficace le risque de déclenchement intempestif de la charge pyrotechnique du dispositif pyrotechnique, et ce tant lors de la mise en place du dispositif pyrotechnique qu'après sa mise en place, ainsi que lors de son retrait.

Selon un autre aspect, l'invention vise à permettre un diagnostic visuel rapide du dispositif pyrotechnique afin de déterminer sans ambiguïté son état d'activation ou de désactivation.

Pour atteindre ces buts ainsi que d'autres, l'invention selon la revendication 1 propose un dispositif pyrotechnique destiné à la destruction des animaux creusant des galeries tels qu'une taupe par la mise à feu d'une charge pyrotechnique, comportant des moyens de détection de l'animal et un boîtier, dans lequel :
- le boîtier contient un circuit électrique de mise à feu comprenant un contacteur de mise à feu piloté par les moyens de détection,
- le boîtier contient des moyens d'interruption du circuit électrique de mise à feu, permettant sélectivement d'interrompre ou de rétablir la continuité d'un tronçon de circuit électrique de mise à feu,
- le dispositif pyrotechnique comporte également un capot qui peut être disposé sur le boîtier et sur les moyens de détection dans une position de recouvrement dans laquelle la continuité du tronçon de circuit électrique de mise à feu est établie,
et dans lequel le capot est amovible, de façon à pouvoir être séparé du boîtier dans une position de retrait dans laquelle la continuité du tronçon de circuit électrique de mise à feu est interrompue.

La mise en place du dispositif pyrotechnique selon l'invention s'effectue en l'absence de son capot. La continuité du tronçon de circuit électrique de mise à feu est alors interrompue et il n'y a alors aucun risque d'explosion accidentelle de la charge pyrotechnique. La sécurité des personnes est donc assurée lors de la mise en place du dispositif pyrotechnique.

Afin d'établir la continuité du tronçon de circuit électrique de mise à feu, le capot doit obligatoirement être rapporté en position de recouvrement, de telle sorte que l'état du dispositif pyrotechnique peut être visuellement perçu sans ambiguïté. Si le capot est en position de recouvrement, alors le dispositif pyrotechnique est activé. Si le capot est en position de retrait, alors le dispositif pyrotechnique est désactivé.

Lorsque le dispositif pyrotechnique est activé, le capot amovible est en position de recouvrement et recouvre simultanément le boîtier et les moyens de détection. Le capot amovible limite ainsi l'accès aux moyens de détection et au boîtier, ce qui permet de sécuriser les personnes une fois le dispositif pyrotechnique mis en place.

Lorsqu'un utilisateur saisit un dispositif pyrotechnique de lutte contre les taupes selon l'invention, il effectue naturellement une préhension du capot de celui-ci afin de soulever l'ensemble du dispositif pyrotechnique. Selon la présente invention, cette préhension par le capot conduit à une séparation du capot et du boîtier, à la grande surprise de l'utilisateur qui pensait emporter la totalité du dispositif pyrotechnique. Dès lors que la séparation du capot est intervenue, le circuit de mise à feu est inhibé, de sorte que l'utilisateur est ainsi sécurisé à son insu de façon simple, efficace et peu onéreuse.

Par exemple, un enfant désirant manipuler le dispositif pyrotechnique une fois celui-ci mis en place devra retirer le capot amovible afin de pouvoir accéder aux moyens de détection et/ou au boîtier. L'enfant ne pourra alors librement manipuler le boîtier et/ou les moyens de détection qu'une fois le capot amovible retiré, ce qui aura préalablement désactivé le dispositif pyrotechnique.

Dans un premier mode de réalisation de l'invention, on peut prévoir que :
- les moyens d'interruption comportent un commutateur, connecté en série dans le circuit électrique de mise à feu, et rappelé en permanence en position ouverte par des moyens de rappel élastiques,
- le capot comporte des moyens d'appui qui, lorsqu'on déplace le capot en position de recouvrement, repoussent le commutateur en position fermée à rencontre des moyens de rappel élastiques.

Dans un second mode de réalisation de la présente invention, on peut prévoir que :
- le circuit électrique de mise à feu comprend un tronçon mobile de circuit solidaire du capot et une partie fixe de circuit solidaire du boîtier, ladite partie fixe de circuit comportant une interruption,
- lorsque le capot est en position de recouvrement, le tronçon mobile de circuit est en contact avec la partie fixe de circuit pour établir la continuité du circuit électrique de mise à feu dans la zone de l'interruption.

De préférence, on peut prévoir que :
- le boîtier comporte une face inférieure de posage adaptée pour reposer sur le sol,
- le boîtier et le capot sont conformés et dimensionnés de telle sorte que, lorsque le boîtier repose sur le sol et que le capot est en position de recouvrement, le capot s'oppose à ce qu'un utilisateur puisse saisir manuellement le boîtier et les moyens de détection.

Il y a ainsi peu de risques qu'une fois mis en place sur le sol le dispositif pyrotechnique se déclenche accidentellement et blesse une personne.

De préférence, on peut prévoir que le capot comporte une paroi supérieure ayant des dimensions telles que ladite paroi supérieure déborde tout autour du boîtier et des moyens de détection selon un dépassement périphérique.

Le dépassement périphérique permet d'empêcher efficacement à un utilisateur d'accéder au boîtier et/ou aux moyens de détection, et évite ainsi une mise à feu accidentelle de la charge pyrotechnique.

Avantageusement, on peut prévoir que :
- le boîtier comporte une face inférieure de posage adaptée pour reposer sur le sol,
- le capot comporte une paroi périphérique latérale s'étendant à l'écart de la paroi supérieure jusqu'à un bord périphérique inférieur,
- la paroi périphérique latérale a une hauteur telle que, lorsque le boîtier repose sur le sol et que le capot est rapporté sur le boîtier, le bord périphérique inférieur est situé au voisinage du niveau de la face inférieure de posage.

L'utilisateur peut ainsi difficilement passer ses mains par-dessous le capot amovible pour accéder au boîtier ou aux moyens de détection. Il lui sera ainsi très difficile de parvenir à déclencher une mise à feu sans avoir au préalable retiré le capot amovible et ainsi désactivé le dispositif pyrotechnique.

Avantageusement, les moyens de détection peuvent comporter un palpeur destiné à être inséré en tout ou partie dans la galerie de l'animal.

Un palpeur est un moyen simple, fiable et efficace pour détecter un animal tel qu'une taupe.

De préférence, ledit palpeur peut comprendre une pluralité de tronçons séparables de tige.

La longueur du palpeur peut ainsi être aisément modifiée et adaptée en fonction de la profondeur de la galerie creusée par les animaux, et reste compatible avec la présence du capot amovible lorsque celui-ci est en position de recouvrement.

En alternative, on peut prévoir que ledit palpeur comprend une tige télescopique.

Avantageusement, on peut prévoir que :
- le boîtier comporte une face inférieure de posage adaptée pour reposer sur le sol,
- le boîtier comporte des moyens d'ancrage dans le sol s'étendant depuis la face inférieure de posage.

Les moyens d'ancrage permettent d'éviter tout mouvement du boîtier une fois le dispositif pyrotechnique installé sur le sol. On limite ainsi le risque de mouvements intempestifs du boîtier et/ou des moyens de détection, mouvements susceptibles d'entraîner une mise à feu accidentelle de la charge pyrotechnique.

D'autres objets, caractéristiques et avantages de la présente invention ressortiront de la description suivante de modes de réalisation particuliers, faite en relation avec les figures jointes, parmi lesquelles :
- la figure 1 est une vue de côté d'un dispositif pyrotechnique selon un premier mode de réalisation de l'invention, avec un capot amovible en position de recouvrement ;
- la figure 2 est une vue de face et en coupe du dispositif pyrotechnique de la figure 1 ;
- la figure 3 est une vue schématique de côté et en coupe du dispositif pyrotechnique de la figure 1 ;
- la figure 4 est une vue du dispositif pyrotechnique de la figure 2 avec son capot amovible en position de retrait ;
- la figure 5 est une vue schématique de côté et en coupe du dispositif pyrotechnique de la figure 4 ;
- la figure 6 est une vue schématique de côté et en coupe d'un dispositif pyrotechnique selon un second mode de réalisation de l'invention, avec un capot amovible en position de recouvrement ;
- la figure 7 est une vue schématique de côté et en coupe du dispositif pyrotechnique de la figure 6 avec son capot amovible en position de retrait ;
- la figure 8 est une vue de dessus du dispositif pyrotechnique de la figure 1 ;
- la figure 9 est une vue en perspective de dessus du dispositif pyrotechnique de la figure 4 ;
- la figure 10 est une vue en perspective de dessous du dispositif pyrotechnique de la figure 4 ;
- la figure 11 est une vue de dessous du dispositif pyrotechnique de la figure 1 ; et
- la figure 12 est une vue en perspective d'un palpeur en cours d'assemblage.

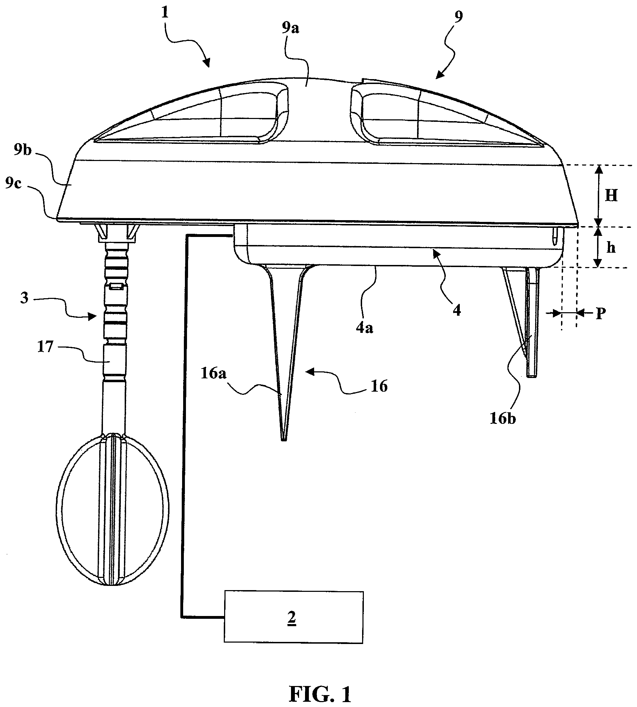

Les figures 1 à 12 illustrent deux modes de réalisation d'un dispositif pyrotechnique selon l'invention.

Sur la figure 1, on distingue un dispositif pyrotechnique 1 destiné à la destruction des animaux creusant des galeries tels qu'une taupe par la mise à feu d'une charge pyrotechnique. Le dispositif pyrotechnique 1 comporte des moyens de détection 3 de l'animal, une charge pyrotechnique 2 et un boîtier 4.

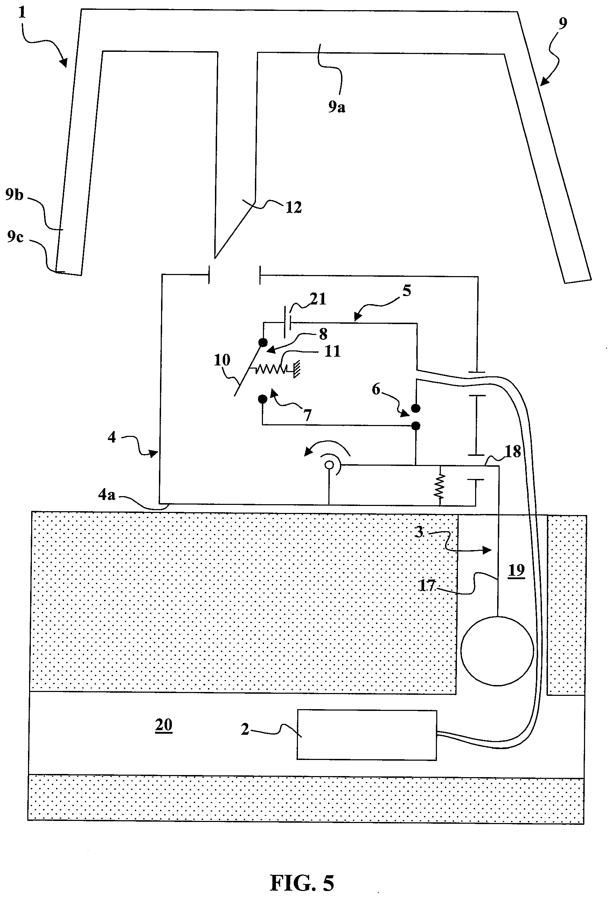

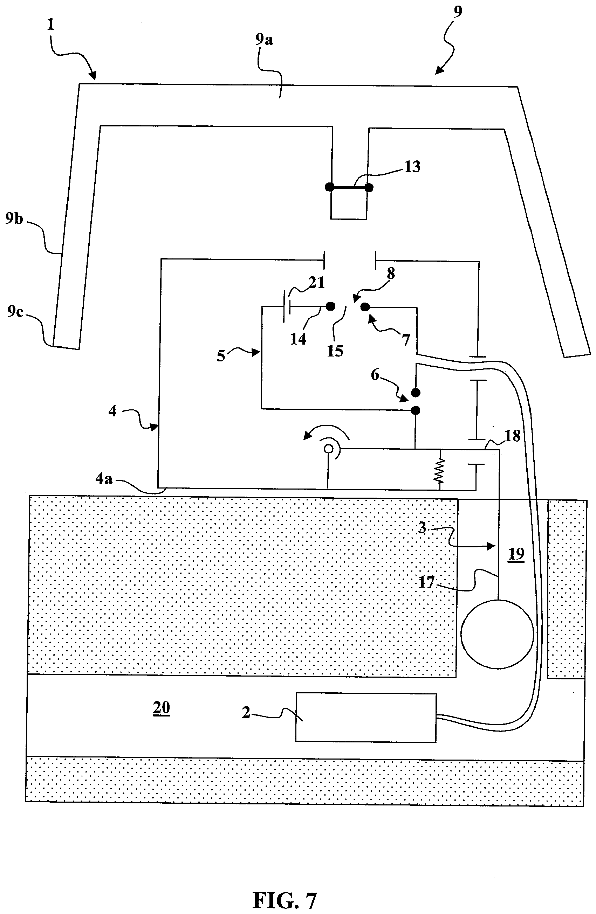

Comme on le voit plus particulièrement sur les figures 5 et 7, le boîtier 4 contient :
- un circuit électrique de mise à feu 5 comprenant un contacteur de mise à feu 6 piloté par les moyens de détection 3,
- des moyens d'interruption 7 du circuit électrique de mise à feu 5, permettant sélectivement d'interrompre ou de rétablir la continuité d'un tronçon 8 de circuit électrique de mise à feu 5.

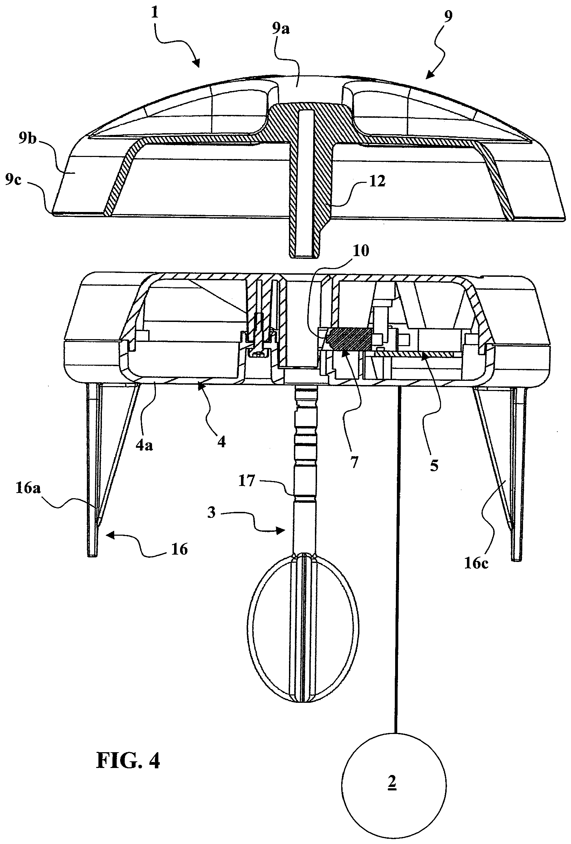

Le dispositif pyrotechnique 1 comporte un capot 9 amovible, qu'un utilisateur peut sélectivement rapporter sur le boîtier 4 et sur les moyens de détection 3 dans une position de recouvrement (figures 1 à 3 et 6), et que l'utilisateur peut sélectivement séparer du boîtier 4 dans une position de retrait (figures 4, 5, 7, 9 et 10).

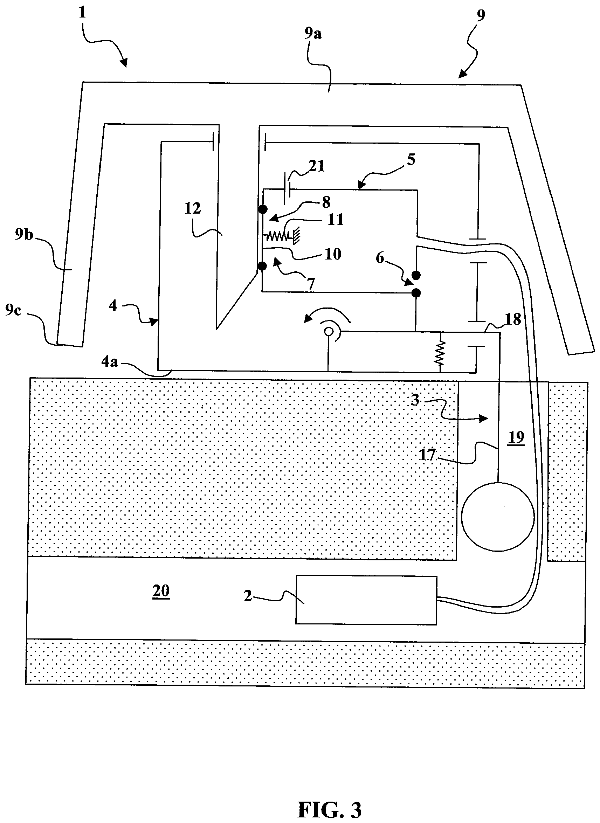

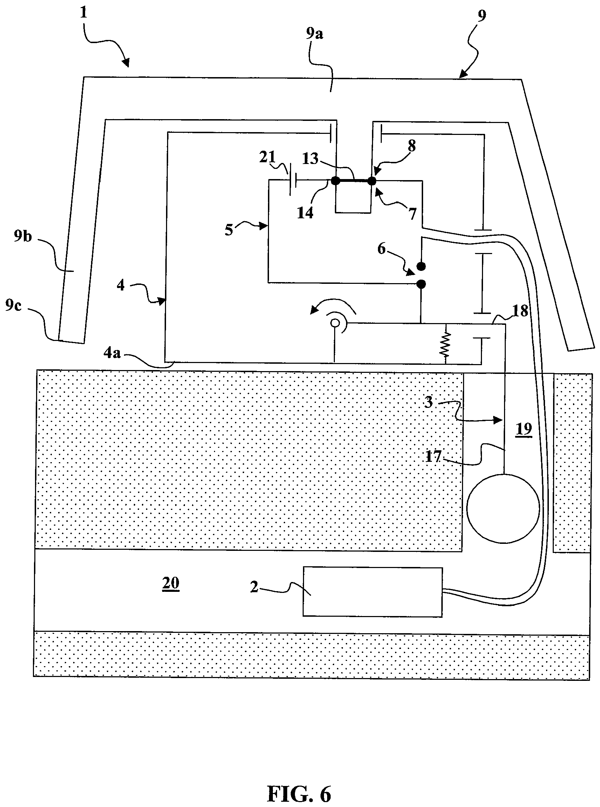

En position de retrait du capot 9, la continuité du tronçon 8 de circuit électrique de mise à feu 5 est interrompue (figures 5 et 7), tandis qu'en position de recouvrement du capot 9, la continuité du tronçon 8 de circuit électrique de mise à feu 5 est établie (figures 3 et 6).

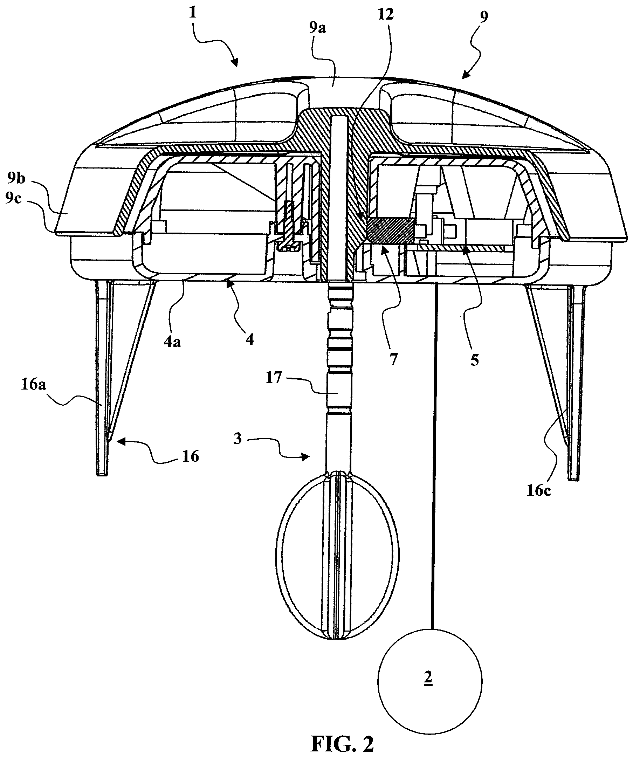

Sur les figures 2 à 5 est illustré un premier mode de réalisation de l'invention. Dans ce premier mode de réalisation, on prévoit que :
- les moyens d'interruption 7 comportent un commutateur 10 déplaçable ou déformable, par exemple pivotant, connecté en série dans le circuit électrique de mise à feu 5, et rappelé en permanence en position ouverte par des moyens de rappel élastiques 11,
- le capot 9 comporte des moyens d'appui 12 qui, lorsqu'on déplace le capot 9 en position de recouvrement (figure 3), repoussent le commutateur 10 en position fermée à l'encontre des moyens de rappel élastiques 11.

Dans un second mode de réalisation de l'invention schématiquement illustré sur les figures 6 et 7, on prévoit que :
- le circuit électrique de mise à feu 5 comprend un tronçon mobile de circuit 13 solidaire du capot 9, et une partie fixe de circuit 14 solidaire du boîtier 4, ladite partie fixe de circuit 14 comportant une interruption 15,
- lorsque le capot 9 est en position de recouvrement (figure 6), le tronçon mobile de circuit 13 est en contact avec la partie fixe de circuit 14 pour établir la continuité du circuit électrique de mise à feu 5 dans la zone de l'interruption 15.

On voit plus particulièrement sur la figure 1 que :
- le boîtier 4 comporte une face inférieure de posage 4a adaptée pour reposer sur le sol,
- le boîtier 4 et le capot 9 sont conformés et dimensionnés de telle sorte que, lorsque le boîtier 4 repose sur le sol et que le capot 9 est en position de recouvrement, le capot 9 est enveloppant et s'oppose à ce qu'un utilisateur puisse saisir manuellement le boîtier 4 et les moyens de détection 3.

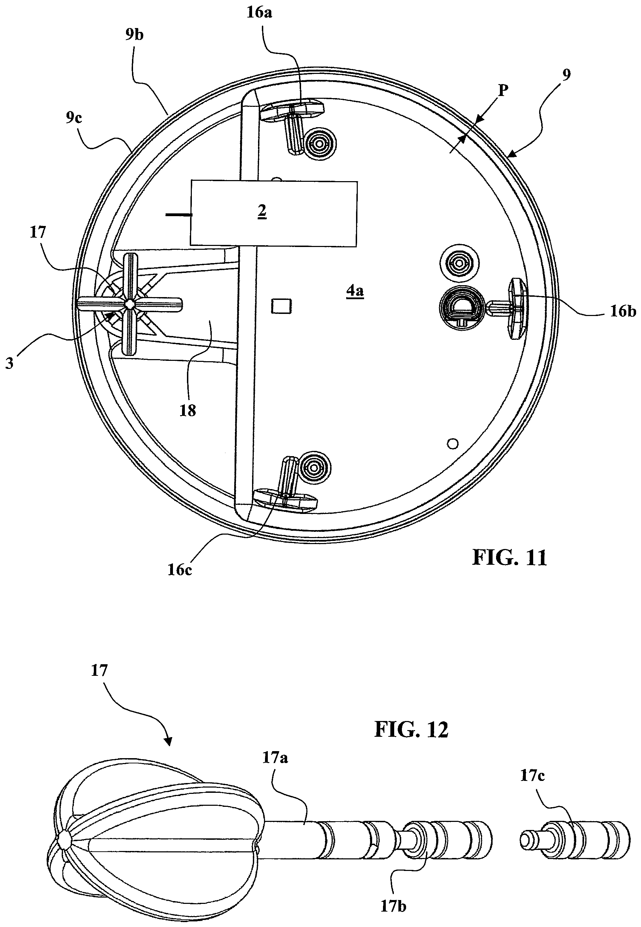

On voit plus particulièrement sur la figure 1 que le capot 9 comporte une paroi supérieure 9a de dimensions telles que ladite paroi supérieure 9a déborde radialement tout autour du boîtier 4 et des moyens de détection 3 selon un dépassement périphérique P (figures 1 et 11).

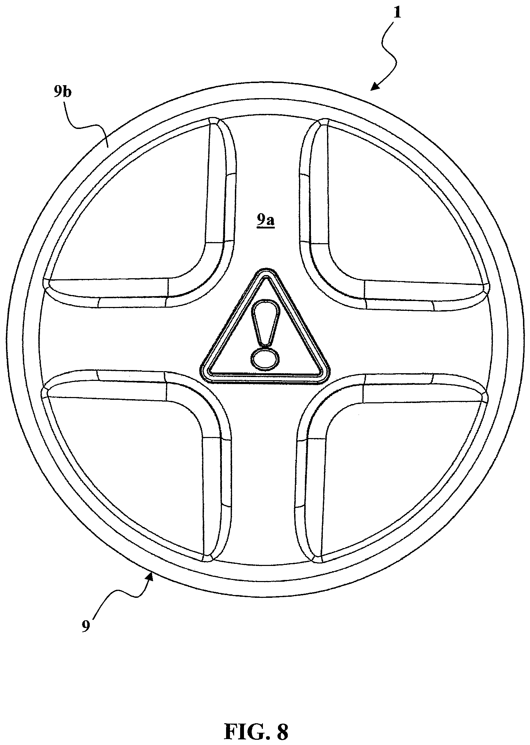

De la sorte, une fois mis en place sur le sol, le dispositif pyrotechnique 1 se présente comme illustré en vue de dessus sur la figure 8 : les moyens de détection 3 et le boîtier 4 sont totalement recouverts par la paroi supérieure 9a du capot 9 et sont donc inaccessibles.

On voit plus particulièrement sur les figures 1, 9 et 10 que :
- le boîtier 4 comporte une face inférieure de posage 4a adaptée pour reposer sur le sol,
- le capot 9 comporte une paroi périphérique latérale 9b s'étendant à l'écart de la paroi supérieure 9a jusqu'à un bord périphérique inférieur 9c.

On voit plus particulièrement sur la figure 1 que la paroi périphérique latérale 9b a une hauteur H telle que, lorsque le boîtier 4 repose sur le sol et que le capot 9 est rapporté sur le boîtier 4, le bord périphérique inférieur 9c est situé au voisinage du niveau de la face inférieure de posage 4a. Ceci limite plus efficacement l'accès au boîtier 4 et aux moyens de détection 3 lorsque le dispositif pyrotechnique 1 est mis en place sur le sol et activé. En pratique, on pourra prévoir que le bord périphérique inférieur 9c se situe à une hauteur h réduite de la face inférieure de posage 4a, cette hauteur h étant inférieure ou égale à environ 1 cm, afin d'empêcher le passage de doigts entre le bord périphérique inférieur 9c et le sol.

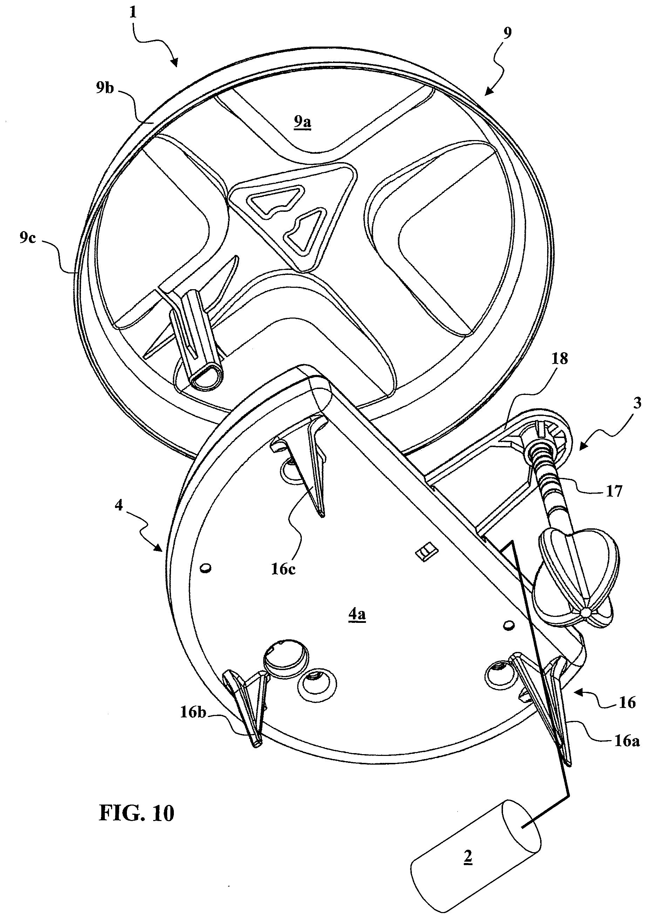

On voit plus particulièrement sur la figure 10 que :
- le boîtier 4 comporte une face inférieure de posage 4a adaptée pour reposer sur le sol,
- le boîtier 4 comporte des moyens d'ancrage 16 dans le sol s'étendant depuis la face inférieure de posage 4a.

En l'espèce, les moyens d'ancrage 16 comportent trois pointes 16a à 16c qui permettent d'ancrer de façon stable le boîtier 4 dans le sol.

Les moyens d'ancrage 16 s'opposent aux mouvements intempestifs et indésirables du boîtier 4 et/ou des moyens de détection 3, mouvements qui pourraient déclencher une mise à feu accidentelle de la charge pyrotechnique 2 alors qu'un utilisateur est à proximité.

Sur les figures 1 à 7 et 9 à 11, les moyens de détection 3 comportent un palpeur 17 destiné à être inséré dans la galerie de l'animal. La galerie de l'animal pouvant être située à des profondeurs variables, le palpeur 17 comprend une pluralité de tronçons 17a à 17c de tige (figure 12), dont certains (17b, 17c) sont séparables. Selon la profondeur de la galerie de l'animal, l'utilisateur pourra choisir d'ajouter au tronçon d'extrémité 17a un ou plusieurs des tronçons séparables 17b et 17c.

Dans une alternative, non représentée sur les figures, le palpeur 17 peut comprendre une tige télescopique à tronçons coulissants, le caractère télescopique de la tige permettant d'ajuster en continu et au mieux la longueur du palpeur 17.

L'utilisation du dispositif pyrotechnique 1 selon l'invention est expliquée ci-après au moyen des figures 3 et 5 à 7.

L'utilisateur commence par déboucher le conduit vertical 19 de la taupinière jusqu'à atteindre la galerie 20. La charge pyrotechnique 2 est installée dans la galerie 20. Puis le palpeur 17 est assemblé afin que celui-ci présente une hauteur satisfaisante.

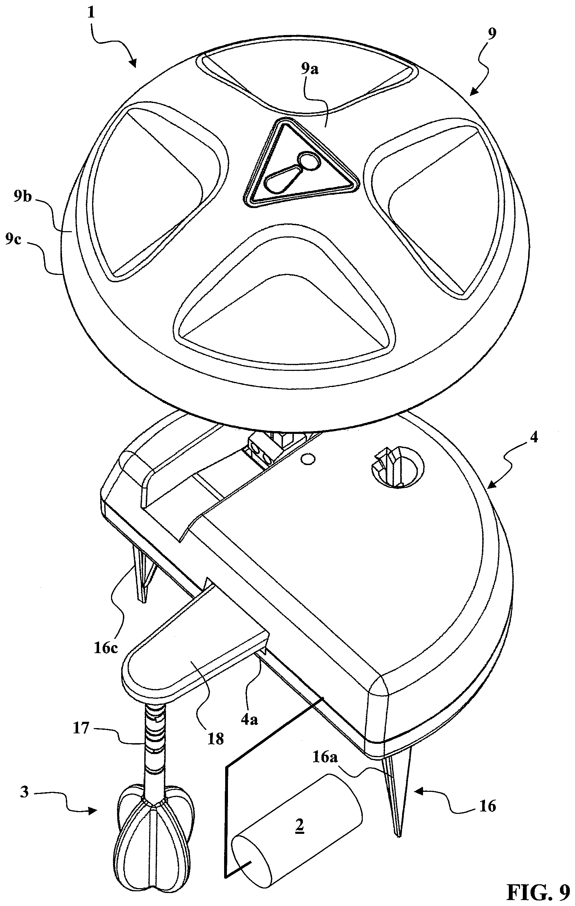

Le palpeur 17 est alors fixé selon son extrémité supérieure à un levier 18 plus particulièrement visible sur les figures 9 à 11.

L'utilisateur rapporte ensuite le boîtier 4 muni du palpeur 17 sur la taupinière en engageant le palpeur 17 dans le conduit vertical 19 de la taupinière. Le boîtier 4 est jusque là dépourvu de son capot 9 amovible, ce qui assure une interruption 15 de la continuité du tronçon 8 du circuit électrique de mise à feu 5. L'utilisateur ne risque ainsi pas de déclencher accidentellement la mise à feu de la charge pyrotechnique 2.

Lors de la mise en place du boîtier 4, l'utilisateur ancre le boîtier 4 dans le sol grâce aux pointes 16a à 16c.

L'utilisateur rapporte alors le capot 9 amovible en position de recouvrement, ce qui a pour effet d'établir la continuité du tronçon 8 de circuit électrique de mise à feu 5 : le dispositif pyrotechnique 1 est alors activé et prêt à être déclenché en cas de détection d'un animal.

Après que le dispositif pyrotechnique 1 ait été installé, le capot 9 limite tout accès d'un utilisateur ou d'un enfant aux moyens de détection 3 et au boîtier 4, ce qui évite une mise à feu accidentelle de la charge pyrotechnique 2. En effet, pour manipuler le dispositif pyrotechnique 1 et/ou le retirer, l'utilisateur ou l'enfant est contraint de retirer préalablement le capot 9 amovible, ce qui a pour effet d'interrompre la continuité du tronçon 8 de circuit électrique de mise à feu 5. Le dispositif pyrotechnique 1 est alors désactivé et la charge pyrotechnique 2 ne peut plus être mise à feu, même par déplacement du boîtier 4 ou du palpeur 17.

La sécurité des utilisateurs et des enfants est ainsi assurée lors de l'installation, de l'utilisation et du retrait du dispositif pyrotechnique 1.

Lorsque le dispositif pyrotechnique 1 est activé et qu'un animal déplace le palpeur 17 (par exemple lorsqu'une taupe tente de reboucher le conduit vertical 19), le mouvement est transmis au levier 18 qui se déplace et ferme le contacteur de mise à feu 6. L'énergie électrique de la source d'alimentation électrique 21 met alors à feu la charge pyrotechnique 2, qui explose et tue l'animal.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pyrotechnique (1) destiné à la destruction des animaux creusant des galeries (20) tels qu'une taupe par la mise à feu d'une charge pyrotechnique (2), comportant des moyens de détection (3) de l'animal et un boîtier (4), dans lequel :
- le boîtier (4) contient un circuit électrique de mise à feu (5) comprenant un contacteur de mise à feu (6) piloté par les moyens de détection (3),
- le boîtier (4) contient des moyens d'interruption (7) du circuit électrique de mise à feu (5), permettant sélectivement d'interrompre ou de rétablir la continuité d'un tronçon (8) de circuit électrique de mise à feu (5), **caractérisé en ce que** le dispositif pyrotechnique comporte un capot (9) qui peut être disposé sur le boîtier (4) et sur les moyens de détection (3) dans une position de recouvrement dans laquelle la continuité du tronçon (8) de circuit électrique de mise à feu (5) est établie, et **en ce que** le capot (9) est amovible, de façon à pouvoir être séparé du boîtier (4) dans une position de retrait dans laquelle la continuité du tronçon (8) de circuit électrique de mise à feu (5) est interrompue.

2. Dispositif pyrotechnique (1) selon la revendication 1, **caractérisé en ce que** :
- les moyens d'interruption (7) comportent un commutateur (10), connecté en série dans le circuit électrique de mise à feu (5), et rappelé en permanence en position ouverte par des moyens de rappel élastiques (11),
- le capot (9) comporte des moyens d'appui (12) qui, lorsqu'on déplace le capot (9) en position de recouvrement, repoussent le commutateur (10) en position fermée à l'encontre des moyens de rappel élastiques (11).

3. Dispositif pyrotechnique (1) selon la revendication 1, **caractérisé en ce que** :
- le circuit électrique de mise à feu (5) comprend un tronçon mobile de circuit (13) solidaire du capot (9), et une partie fixe de circuit (14) solidaire du boîtier (4), ladite partie fixe de circuit (14) comportant une interruption (15),
- lorsque le capot (9) est en position de recouvrement, le tronçon mobile de circuit (13) est en contact avec la partie fixe de circuit (14) pour établir la continuité du circuit électrique de mise à feu (5) dans la zone de l'interruption (15).

4. Dispositif pyrotechnique (1) selon l'une quelconque des revendications 1 à 3, **caractérisé en ce que** :
- le boîtier (4) comporte une face inférieure de posage (4a) adaptée pour reposer sur le sol,
- le boîtier (4) et le capot (9) sont conformés et dimensionnés de telle sorte que, lorsque le boîtier (4) repose sur le sol et que le capot (9) est en position de recouvrement, le capot (9) s'oppose à ce qu'un utilisateur puisse saisir manuellement le boîtier (4) et les moyens de détection (3).

5. Dispositif pyrotechnique (1) selon l'une quelconque des revendications 1 à 4, **caractérisé en ce que** le capot (9) comporte une paroi supérieure (9a) ayant des dimensions telles que ladite paroi supérieure (9a) déborde tout autour du boîtier (4) et des moyens de détection (3) selon un dépassement périphérique (P).

6. Dispositif pyrotechnique (1) selon l'une quelconque des revendications 1 à 5, **caractérisé en ce que** :
- le boîtier (4) comporte une face inférieure de posage (4a) adaptée pour reposer sur le sol,
- le capot (9) comporte une paroi périphérique latérale (9b) s'étendant à l'écart de la paroi supérieure (9a) jusqu'à un bord périphérique inférieur (9c),
- la paroi périphérique latérale (9b) a une hauteur (H) telle que, lorsque le boîtier (4) repose sur le sol et que le capot (9) est rapporté sur le boîtier (4), le bord périphérique inférieur (9c) est situé au voisinage du niveau de la face inférieure de posage (4a).

7. Dispositif pyrotechnique (1) selon l'une quelconque des revendications 1 à 6, **caractérisé en ce que** les moyens de détection (3) comportent un palpeur (17) destiné à être inséré en tout ou partie dans la galerie (20) de l'animal.

8. Dispositif pyrotechnique (1) selon la revendication 7, **caractérisé en ce que** ledit palpeur (17) comprend une pluralité de tronçons séparables (17a-17c) de tige.

9. Dispositif pyrotechnique (1) selon la revendication 7, **caractérisé en ce que** ledit palpeur (17) comprend une tige télescopique.

10. Dispositif pyrotechnique (1) selon l'une quelconque des revendications 1 à 9, **caractérisé en ce que** :
- le boîtier (4) comporte une face inférieure de posage (4a) adaptée pour reposer sur le sol,
- le boîtier (4) comporte des moyens d'ancrage (16) dans le sol s'étendant depuis la face inférieure de posage (4a).

## Patentansprüche

1. Pyrotechnische Vorrichtung (1) zur Vernichtung von Gänge (20) grabenden Tieren, wie zum Beispiel Maulwürfen, durch Abfeuern einer pyrotechnischen Ladung (2), umfassend Mittel zum Detektieren (3) der Tiere und ein Gehäuse (4), in dem:
- das Gehäuse (4) eine elektrische Abzugschaltung (5) enthält, die einen Abzugskontaktgeber (6) umfasst, der mit den Mittel zum Detektieren (3) betrieben wird,
- das Gehäuse (4) Mittel zum Unterbrechen (7) der elektrischen Abfeuerschaltung (5), die ein wahlweises Unterbrechen oder Wiederherstellen der Kontinuität eines Abschnittes (8) der elektrische Abzugschaltung (5) ermöglichen,
**dadurch gekennzeichnet, dass**
die pyrotechnische Vorrichtung eine Abdeckung (9) umfasst, die über dem Gehäuse (4) und über den Mitteln zum Detektieren (3) in einer Abdeckstellung angeordnet werden kann, in der die Kontinuität des Abschnittes (8) der elektrischen Abzugsschaltung (5) aufgebaut werden kann, und
dass die Abdeckung (9) abnehmbar ist, so dass sie vom Gehäuse (4) in einer Außenstellung abgenommen werden kann, in der die Kontinuität des Abschnittes (8) der elektrischen Abzugsschaltung (5) unterbrochen ist.

2. Pyrotechnische Vorrichtung (1) nach Anspruch 1, **dadurch gekennzeichnet, dass**:
- die Mittel zum Unterbrechen (7) einen Schalter (10) umfassen, der in Reihe mit der elektrischen Abzugsschaltung (5) verbunden ist und durch elastische Rückstellmittel (11) ständig in die geöffnete Stellung zurückgestellt wird,
- die Abdeckung (9) Lagermittel (12) enthält, die, wenn die Abdeckung (9) in die Abdeckstellung bewegt wird, den Schalter (10) in die Schließstellung gegen die elastischen Rückstellmittel (11) zurückdrücken.

3. Pyrotechnische Vorrichtung (1) nach Anspruch 1, **dadurch gekennzeichnet, dass**:
- die elektrische Abzugsschaltung (5) einen beweglichen Schaltungsabschnitt (13), der mit der Abdeckung (9) verbunden ist, und einen mit dem Gehäuse (4) verbundenen stationären Schaltungsabschnitt (14) umfasst, wobei der genannte stationäre Schaltungsabschnitt (14) eine Unterbrechung (15) enthält,
- wenn die Abdeckung (9) in der Abdeckstellung ist, der bewegliche Schaltungsabschnitt (13) im Kontakt mit dem stationären Schaltungsabschnitt (14) steht, um die Kontinuität der elektrischen Abzugsschaltung (5) im Bereich der Unterbrechung (15) aufzubauen.

4. Pyrotechnische Vorrichtung (1) nach irgendeinem der Ansprüche 1 bis 3, **dadurch gekennzeichnet, dass**:
- das Gehäuse (4) eine am Boden liegende Seite (4a) zum Auflegen auf den Untergrund enthält,
- das Gehäuse (4) und die Abdeckung (9) eingerichtet und ausgebildet sind, so dass wenn das Gehäuse (4) auf dem Untergrund aufgelegt und die Abdeckung (9) in der Abdeckstellung ist, die Abdeckung (9) einen Benutzer daran hindert fähig zu sein, manuell das Gehäuse (4) und die Mittel zum Detektieren (3) zu greifen.

5. Pyrotechnische Vorrichtung (1) nach irgendeinem der Ansprüche 1 bis 4, **dadurch gekennzeichnet, dass** die Abdeckung (9) eine Deckwand (9a) mit Ausdehnungen enthält, so dass die besagte Deckwand (9a) mit einem äußeren Überhang (P) überall herausragt um das Gehäuse (4) und den Mitteln zum Detektieren (3).

6. Pyrotechnische Vorrichtung (1) nach irgendeinem der Ansprüche 1 bis 5, **dadurch gekennzeichnet, dass**:
- das Gehäuse (4) eine am Boden liegende Seite (4a) zum Auflegen auf den Untergrund besitzt,
- die Abdeckung (9) eine laterale äußere Wand (9b) enthält, die sich weg von der Deckwand (9a) zu einer äußeren Bodenkante (9c) erstreckt,
- die laterale äußere Wand (9b) eine Höhe (H) aufweist, so dass wenn das Gehäuse (4) auf dem Boden liegt und die Abdeckung (9) auf das Gehäuse (4) aufgesetzt ist, die äußere Bodenkante (9c) sich in der Nähe der Ebene der am Boden liegenden Seite (4a) befindet.

7. Pyrotechnische Vorrichtung (1) nach irgendeinem der Ansprüche 1 bis 6, **dadurch gekennzeichnet, dass** die Mittel zum Detektieren (3) einen Fühler (17) umfassen, der eingerichtet ist, ganz oder teilweise in den Gang (20) des Tieres eingeführt zu werden.

8. Pyrotechnische Vorrichtung (1) nach Anspruch 7, **dadurch gekennzeichnet, dass** der genannte Fühler (17) eine Vielzahl von voneinander trennbaren Stababschnitten (17a-17c) umfasst.

9. Pyrotechnische Vorrichtung (1) nach Anspruch 7, **dadurch gekennzeichnet, dass** der genannte Fühler (17) eine Teleskopstange umfasst.

10. Pyrotechnische Vorrichtung (1) nach irgendeinem der Ansprüche 1 bis 9, **dadurch gekennzeichnet, dass**:
- das Gehäuse (4) eine am Boden liegende Seite (4a) zum Auflegen auf den Untergrund umfasst,
- das Gehäuse (4) Mittel zum Verankern (16) mit dem Boden umfasst, die sich von der am Boden liegende Seite (4a)erstrecken.

## Claims

1. Pyrotechnic device (1) intended for the destruction of animals that dig tunnels (20) such as moles by firing a pyrotechnic charge (2), comprising means (3) for detecting the animal and a housing (4), in which:
- the housing (4) contains an electrical firing circuit (5) comprising a firing contactor (6) driven by the detection means (3),
- the housing (4) contains means (7) for breaking the electrical firing circuit (5), making it possible to selectively break or re-establish the continuity of a section (8) of electrical firing circuit (5), **characterized in that** the pyrotechnic device comprises :
- a cover (9) can be arranged over the housing (4) and over the detection means (3) in a covering position in which the continuity of the section (8) of electrical firing circuit (5) is established, and
**in that** the cover (9) is removable, so as to be able to be separated from the housing (4) in a removed position in which the continuity of the section (8) of electrical firing circuit (5) is broken.

2. Pyrotechnic device (1) according to claim 1, **characterized in that**:
- the breaking means (7) comprise a switch (10), connected in series in the electrical firing circuit (5), and permanently returned to the open position by elastic return means (11),
- the cover (9) includes bearing means (12) which, when the cover (9) is moved to the covering position, push back the switch (10) to the closed position against the elastic return means (11).

3. Pyrotechnic device (1) according to claim 1, **characterized in that**:
- the electrical firing circuit (5) comprises a movable circuit section (13) attached to the cover (9) and a fixed circuit part (14) attached to the housing (4), said fixed circuit part (14) including a break (15),
- when the cover (9) is in the covering position, the movable circuit section (13) is in contact with the fixed circuit part (14) to establish the continuity of the electrical firing circuit (5) in the area of the break (15).

4. Pyrotechnic device (1) according to any one of claims 1 to 3, **characterized in that**:
- the housing (4) includes a bottom laying face (4a) suitable for resting on the ground,
- the housing (4) and the cover (9) are conformed and dimensioned so that, when the housing (4) rests on the ground and the cover (9) is in the covering position, the cover (9) prevents a user from being able to manually grasp the housing (4) and the detection means (3).

5. Pyrotechnic device (1) according to any one of claims 1 to 4, **characterized in that** the cover (9) includes a top wall (9a) having dimensions such that said top wall (9a) juts out all around the housing (4) and the detection means (3) by a peripheral overhang (P).

6. Pyrotechnic device (1) according to any one of claims 1 to 5, **characterized in that**:
- the housing (4) has a bottom laying face (4a) suitable for resting on the ground,
- the cover (9) includes a lateral peripheral wall (9b) extending away from the top wall (9a) to a bottom peripheral edge (9c),
- the lateral peripheral wall (9b) has a height (H) such that, when the housing (4) rests on the ground and the cover (9) is fitted on the housing (4), the bottom peripheral edge (9c) is situated in the vicinity of the level of the bottom laying face (4a).

7. Pyrotechnic device (1) according to any one of claims 1 to 6, **characterized in that** the detection means (3) include a feeler (17) intended to be wholly or partly inserted into the tunnel (20) of the animal.

8. Pyrotechnic device (1) according to claim 7, **characterized in that** said feeler (17) comprises a plurality of separable rod sections (17a-17c).

9. Pyrotechnic device (1) according to claim 7, **characterized in that** said feeler (17) comprises a telescopic rod.

10. Pyrotechnic device (1) according to any one of claims 1 to 9, **characterized in that**:
- the housing (4) has a bottom laying face (4a) suitable for resting on the ground,
- the housing (4) includes means (16) for anchoring in the ground extending from the bottom laying face (4a).
